# EUROPÄISCHE PATENTANMELDUNG

(11) **EP 3 284 974 A1**
(43) Veröffentlichungstag der Anmeldung: **21.02.2018**
(21) Anmeldenummer: 16184863.5
(22) Anmeldetag: 19.08.2016
(51) Int. Cl.: F16H 57/08

(54) **MEHRTEILIGER PLANETENTRÄGER**

(71) Anmelder: Flender GmbH, 46395 Bocholt (DE)
(72) Erfinder: Klein-Hitpass, Arno, 52074 Aachen (DE)
(74) Vertreter: Maier, Daniel Oliver

(57) **Zusammenfassung**

Die Erfindung betrifft einen Planetenträger, bestehend aus mindestens drei Einzelteilen (100, 200, 300), welche an Verbindungsstellen (8, 9) kraft- und/oder formschlüssig miteinander verbunden sind. Ein erstes Einzelteil (100) weist eine antriebsseitige Wange (2) auf. Ein zweites Einzelteil (200) weist eine abtriebsseitige Wange (5) auf. Und ein drittes Einzelteil (300) weist ein die beiden Wangen (2, 5) verbindendes Stegelement (4) auf.

## Beschreibung

Die vorliegende Erfindung betrifft einen mehrteiligen Planetenträger.

Mehrteilige Planetenträger, d.h. aus mehreren fest miteinander verbundenen Einzelkomponenten gebildete Planetenträger, sind bekannt.

DE 2503518 A1 (Zahnradfabrik Friedrichshafen AG) 11.11.1976 beschreibt einen aus zwei miteinander verschweißten scheibenförmigen Blechteilen bestehenden Planetenträger. Eine Planetenachse ist in zwei miteinander fluchtenden Bohrungen der beiden Blechteile gelagert.

EP 0 271 416 A1 (Ateliers de Mecanique Generale SA) 15.06.1988 beschreibt einen Planetenträger, der aus zwei mittels Schraubbolzen miteinander verschraubten Einzelteilen gebildet ist, wobei ein erstes Einzelteil einen Wellenstumpf und eine erste Wange und ein zweites Einzelteil Stege und eine zweite Wange aufweist.

Aufgabe der vorliegenden Erfindung ist es, einen verbesserten mehrteiligen Planetenträger bereitzustellen.

Diese Aufgabe wird erfindungsgemäß durch einen Planetenträger mit den in Anspruch 1 angegebenen Merkmalen gelöst.

Der erfindungsgemäße Planetenträger besteht aus mindestens drei Einzelteilen. Die Einzelteile sind an Verbindungsstellen kraft- und/oder formschlüssig miteinander verbunden. Ein erstes Einzelteil weist eine antriebsseitige Wange auf. Ein zweites Einzelteil weist eine abtriebsseitige Wange auf. Ein drittes Einzelteil weist ein die beiden Wangen verbindendes Stegelement auf, welches vorzugsweise durch z.B. gebildet durch ein Zylinderrohr mit Durchbrüchen.

Der Erfindung liegt die Erkenntnis zugrunde, dass praktikable Möglichkeiten zur Montage und Wartung eines Getriebes, die sog. Serviceability, in der Praxis eine große Bedeutung haben. Ein Getriebeschaden, der wegen schwieriger Zugänglichkeit der beschädigten Bauteile eine lange Standzeit des Getriebes und der korrespondierende Anlage, z.B. einer Windkraftanlage, nötig macht, kann für den Anlagenbetreiber einen enormen wirtschaftlichen Schaden bedeuten. Daher ist die Möglichkeit, ein Getriebe schnell und einfach zu zerlegen, nicht zu unterschätzen.

Formschlüssige Verbindungen entstehen durch das Ineinandergreifen von mindestens zwei Verbindungspartnern. Beispiele sind Nut-Feder-Verbindungen und Kurzverzahnungen.

Kraftschlüssige Verbindungen basieren auf einer Normal-Kraft auf die miteinander zu verbindenden Flächen, deren gegenseitige Verschiebung sie verhindert, solange die Verschiebekraft die durch die Haftreibung bewirkte Kraft nicht überschreitet. Beispiel ist eine Schraubverbindung.

Stoffschlüssige Verbindungen zeichnet aus, dass eine Bauteilverbindung hergestellt wird, die unter normalen Umständen, außer durch Zerstörung nicht mehr gelöst werden kann. Hergestellt werden kann die Verbindung mit arteigenen oder mit artfremden Zusatzwerkstoffen. Beispiele sind Schweiß-, Löt- oder Klebeverbindungen.

Bei herkömmlichen einteiligen Planetenträgern ist, insbesondere durch die kompakte Lagerung der Planeten, die Serviceability begrenzt. Die Erfindung verbessert die Serviceability von Planetengetrieben, da durch die lösbaren Verbindungen die Wangen des Planetenträgers einfach demontiert werden können und somit ein bequemer Zugang zu den Planetenrädern geschaffen werden kann.

Für höhere Leistungsklassen von Windkraftanlagen besteht Bedarf nach Planetenträgern für leistungsverzweigte Planetenstufen; hier bieten mehrteilige Planetenträger wegen ihres relativ geringen Gewichts und der einfachen Montagemöglichkeiten enorme Vorteile.

Auch für Planetengetriebe mit gleitgelagerten Planeten bieten mehrteilige Planetenträger signifikante Vorteile, da hier der Durchmesser der Planetenachse unabhängig vom Durchmesser der Steglager gewählt werden kann. Die Montagefähigkeit der Achse ist hierdurch nicht eingeschränkt.

Vorteilhafte Ausgestaltungen und Weiterbildungen der Erfindung sind in den abhängigen Ansprüchen angegeben.

Gemäß einer bevorzugten Ausgestaltung der Erfindung sind an den Verbindungsstellen der Einzelteile verzahnungsartige Strukturen, insbesondere eine Kurzverzahnung, oder reibwerterhöhende Stoffe, insbesondere Klebstoffe, angeordnet. Von Vorteil ist dabei, dass die Festigkeit und Stabilität des Planetenträgers signifikant erhöht wird.

Gemäß einer bevorzugten Ausgestaltung der Erfindung befinden sich die Verbindungsstellen am größten gemeinsamen Durchmesser der Einzelteile. Von Vorteil ist dabei, dass die Festigkeit und Stabilität des Planetenträgers signifikant erhöht wird.

Gemäß einer bevorzugten Ausgestaltung der Erfindung weist der Planetenträger drei Wangen auf. Von Vorteil ist dabei, dass die Festigkeit und Stabilität der Planetenachse im Planetenträger signifikant erhöht wird.

Gemäß einer bevorzugten Ausgestaltung der Erfindung schneiden die in Achsrichtung projizierten Flächen der Achssitze die Flächen der Planetenträgerlagerung. Eine Durchdringung dieser Hüllkurven bedeutet bei einteilig ausgeführten Trägern, dass der Steglagersitz der kurzen Nabe zur Sicherstellung der Montage Aussparungen enthalten müsste. Durch die mehrteilige Ausführung des Planetenträgers ist man hiervon unabhängig. Von Vorteil ist dabei, dass dadurch der Durchmesser der Planetenachse unabhängig vom Durchmesser der Steglager gewählt werden kann.

Gemäß einer bevorzugten Ausgestaltung der Erfindung weist das erste Einzelteil eine antriebsseitige Wange mit Lastpfadteilung auf. Dabei weist das erste Einzelteil eine antriebsseitige äußere Wange und eine antriebsseitige innere Wange auf, wobei die antriebsseitige innere Wange parallel zur antriebsseitigen äußeren Wange angeordnet ist und mindestens einen antriebsseitigen Achssitz jeweils für ein antriebsseitiges Ende einer Planetenachse aufweist. Dabei ist die Unterscheidung zwischen "innerer" und "äußerer" Wange dadurch definiert, dass bei Betrachtung des Planetenträgers entlang der Rotationsachse R des Planetenträgers von der Antriebsseite her die antriebsseitige äußere Wange näher beim Betrachter liegt als die antriebsseitige innere Wange; somit ist die antriebsseitige äußere Wange in einem "äußeren" Bereich des Planetenträgers angeordnet, wohingegen relativ dazu die antriebsseitige innere Wange weiter in einem "inneren" Bereich des Planetenträgers angeordnet ist. Antriebsseitig hat der Planetenträger somit zwei Wangen, eine innere und eine äußere. Durch die Parallelität der antriebsseitigen äußeren und inneren Wange bietet der Planetenträger somit die Möglichkeit, die Drehsteifigkeit des inneren Lastpfads, welcher von einer antriebsseitigen Nabe zu dem antriebsseitigen Achssitz führt, auf die Drehsteifigkeit des äußeren Lastpfads, welcher von der abtriebsseitigen Nabe zu einem abtriebsseitigen Achssitz führt, so abzustimmen, dass sich unter Last eine definierte Relativverdrehung des antriebsseitigen Achssitzes zu dem abtriebsseitigen Achssitz einstellt. Bei einer optimalen Abstimmung verdrehen sich die beiden Achssitze um dasselbe Maß, so dass die Planetenachse unter Last keine Schiefstellung erfährt. Unter Lastpfad versteht man den Pfad, auf dem die Kräfte aufgrund einer äußeren Belastung von der Antriebsseite durch den Planetenträger zur Abtriebsseite geleitet werden.

Im Folgenden wird die Erfindung anhand mehrerer Ausführungsbeispiele unter Zuhilfenahme der beiliegenden Zeichnung erläutert. Es zeigt jeweils schematisch im Längsschnitt und nicht maßstabsgetreu
- Fig. 1: einen mehrteiligen, zweiwangigen Planetenträger;
- Fig. 2: einen mehrteiligen, zweiwangigen Planetenträger mit vergrößerten Achssitzen, insbesondere für Gleitlagergetriebe;
- Fig. 3: einen mehrteiligen, zweiwangigen Planetenträger mit einwangig gelagerten Tandem-Planeten;
- Fig. 4: einen mehrteiligen, zweiwangigen Planententräger mit zweiwangig gelagerten Tandem-Planeten; und
- Fig. 5: einen mehrteiligen, dreiwangigen Planetenträger mit dreiwangig gelagerten Tandem-Planeten.

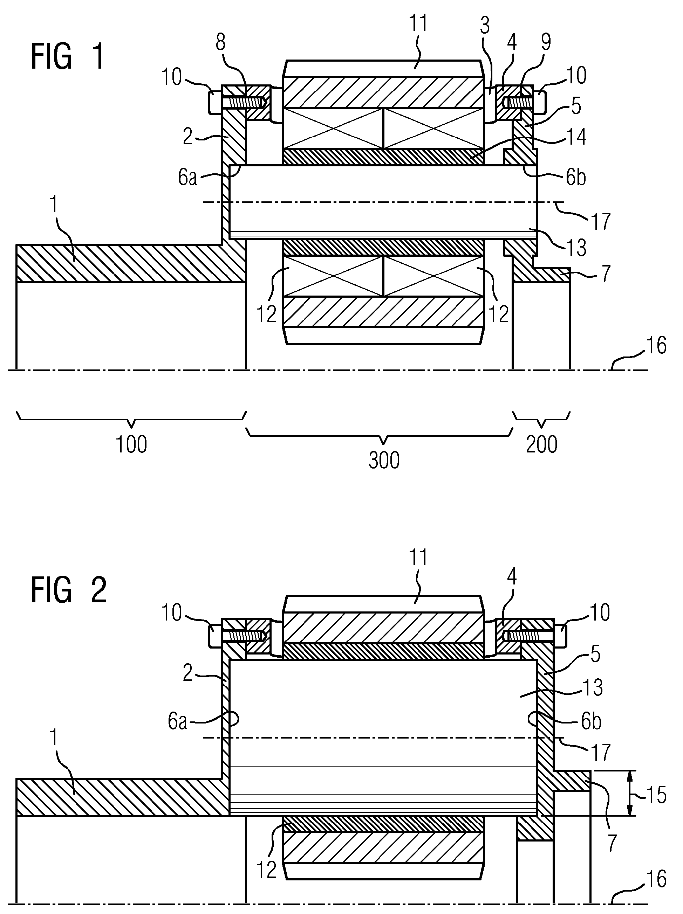

Fig. 1 zeigt einen mehrteiligen Planetenträger mit einem in Wälzlagern 12 gelagerten Planetenrad 11. Der Planetenträger besteht aus drei Einzelteilen 100, 200, 300, welche an Verbindungsstellen 8, 9 kraft- und formschlüssig miteinander verbunden sind. Ein erstes Einzelteil 100 weist eine antriebsseitige Hohlnabe 1 und eine antriebsseitige Wange 2 mit einem antriebsseitigen Achssitz 6a für die Planetenachse 11 auf. Ein zweites Einzelteil 200 weist eine abtriebsseitige Nabe 7 und eine abtriebsseitige Wange 5 mit einem antriebsseitigen Achssitz 6b für die Planetenachse 11 auf. Ein drittes Einzelteil 300 weist ein die beiden Wangen 2, 5 verbindendes Stegelement 4, gebildet durch ein Rohrelement 4 mit für ein auf der Planetenachse 11 drehbar gelagertes Planetenrad 11 vorgesehenen Durchbrüchen 3, auf.

Der Planetenträger ist in einem nicht dargestellten Getriebegehäuse über nicht dargestellte Lagerungen, z.B. Wälz- oder Gleitlager, gelagert, welche zwischen den Naben 1, 7 und dem Getriebegehäuse oder einem fest mit dem Getriebegehäuse verbundenen Lagersteg angeordnet sind.

Das erste Einzelteil 100 und das dritte Einzelteil 300 sind entlang einer ersten Verbindungsstelle 8 mittels Schraubbolzen 10 miteinander verbunden. Am ersten Einzelteil 100 verläuft die Verbindungstelle 8 entlang dem äußeren Umfang der antriebsseitigen Wange 2. Am dritten Einzelteil 300 verläuft die erste Verbindungstelle 8 entlang einer ersten Stirnseite des Rohrs 4. Die erste Verbindungsstelle 8 ist nach dem Verbinden des ersten 100 und dritten Einzelteils 300 als Trennfuge 8 sichtbar.

Zusätzlich zu den kraft- und formschlüssigen Schraubverbindungen sind an den Verbindungsstellen der Einzelteile verzahnungsartige Strukturen, d.h. eine Kurzverzahnung, vorgesehen, welche eine formschlüssige Verbindung ausbilden. Dies erhöht signifikant die Festigkeit und Stabilität des Planetenträgers.

Das zweite Einzelteil 200 und das dritte Einzelteil 300 sind entlang einer zweiten Verbindungsstelle 9 mittels Schraubbolzen 10 miteinander verbunden. Am zweiten Einzelteil 200 verläuft die Verbindungstelle 9 entlang dem äußeren Umfang der abtriebsseitigen Wange 5. Am dritten Einzelteil 300 verläuft die zweite Verbindungstelle 9 entlang einer zweiten Stirnseite des Rohrs 4. Die zweite Verbindungsstelle 9 ist nach dem Verbinden des zweiten 200 und dritten Einzelteils 300 als Trennfuge 9 sichtbar.

Die beiden Achssitze 6a, 6b fluchten entlang einer Rotationsachse 16 des Planetenträgers miteinander, so dass die Rotationsachse 17 der drehfest in den Achssitzen 6a, 6b eingesetzten Planetenachse 13 parallel zur Rotationsachse 16 des Planetenträgers verläuft. Auf der Planetenachse 13 ist zwischen den Wangen 2, 5 ein Lagerinnenring 14 angeordnet, auf welchem Planetenradlager 12 angeordnet sind, so dass das die Planetenradlager 12 umschließende Planetenrad 11 gegenüber der Planetenachse 13 drehbar ist. Dabei ragt das Planetenrad 11 durch den Durchbruch 3 des Stegs 4.

Die Achssitze 6a, 6b können zur Verstärkung des Planetenträgers bzw. zur Spannungsreduktion im Übergang zum Steglagersitz geschlossen ausgeführt werden. Die Achssitze 6a, 6b können als Sacklöcher, wie bei dem antriebsseitigen Achssitz 6a in Fig. 1, oder als Durchgangsbohrungen, wie bei dem abtriebsseitigen Achssitz 6b in Fig. 1, ausgebildet sein.

Fig. 2 zeigt einen mehrteiligen Planetenträger mit relativ großen Achssitzen 6a, 6b. Der in Fig. 2 dargestellte Planetenträger entspricht im Wesentlichen dem in Fig. 1 dargestellten Planetenträger, mit Ausnahme der Achssitze 6a, 6b, welche bei dem in Fig. 2 dargestellten Planetenträger erheblich größer als bei dem in Fig. 1 dargestellten Planetenträger sind. Insbesondere sind die Durchmesser der Achssitze 6a, 6b so groß, dass die in Richtung der Rotationsachse 17 der Planetenachse 13 projizierten Kreisflächen der Achssitze 6a, 6b die Fläche des Lagersitzes 6b des Planetenträgerlagers an der abtriebsseitigen Nabe 7 schneiden, um einen Überlapp 15.

Gegenüber dem in Fig. 1 dargestellten Planetenträger, bei dem das Planetenrad 11 in Wälzlager 12 gelagert ist, ist das in dem in Fig. 2 dargestellten Planetenträger gelagerte Planetenrad 11 über ein Gleitlager 12 drehbar gelagert.

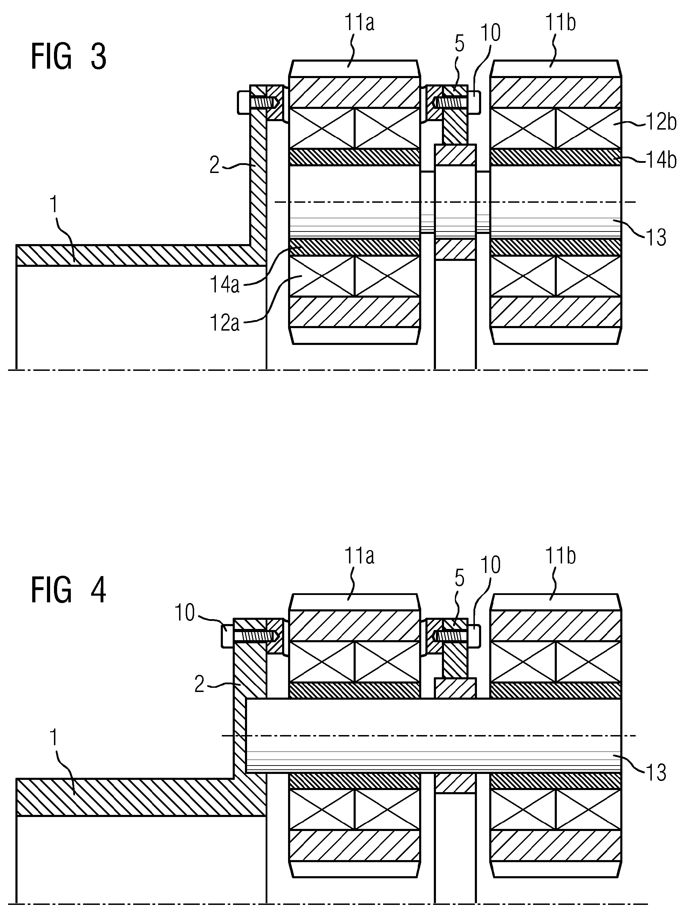

Fig. 3 zeigt einen mehrteiligen, zweiwangigen Planetenträger mit einwangig gelagerten Tandem-Planetenrädern 11a, 11b. Im Gegensatz zu den in den Fig. 1 und 2 dargestellten Planetenträgern, bei denen die Planetenachsen 13 beidseitig in den Wangen 2, 5 des Planetenträgers gelagert sind, ist bei dem in der Fig. 3 dargestellten Planetenträger die Planetenachse 13 mittig in einer einzigen Wange 5 des Planetenträgers gelagert, ähnlich einem sog. bogie plate, das z.B. mit dem Bezugszeichen 15 in Fig. 2 der US 20090170655 A1 (Hansen) 02.07.2009 dargestellt ist. Der Planetenträger weist zwei

Wangen 2, 5 auf, allerdings ist die Planetenachse 13 nur in der abtriebsseitigen Wange 5 gelagert.

Dabei sind auf der Planetenachse 13 zu beiden Seiten der abtriebsseitigen Wange 5 jeweils ein separater Lagerinnenring 14a, 14b, ein separates Lager 12a, 12b und ein separates Planetenrad 11a, 11b angeordnet.

Der Planetenträger weist ausschließlich eine antriebsseitige Nabe 1 auf, aber keine abtriebsseitige Nabe, wie die in den Fig. 1 und 2 dargestellten Planetenträger. Somit kann der Planetenträger nur einseitig gelagert werden.

Fig. 4 zeigt einen mehrteiligen, zweiwangigen Planetenträger mit zweiwangig gelagerten Tandem-Planetenrädern 11a, 11b. Der in Fig. 4 dargestellte Planetenträger unterscheidet sich von dem in Fig. 3 dargestellten Planetenträger im Wesentlichen darin, dass die Planetenachse 13 nicht nur in der abtriebsseitigen Wange 5, sondern auch in der antriebsseitigen Wange 2 gelagert ist. Im Vergleich zu der in Fig. 3 dargestellten Konstruktion verleiht die in Fig. 4 dargestellte Konstruktion der Planetenachse 13 eine höhere Stabilität gegen ein Verkippen. Das abtriebsseitig auf der Planetenachse 13 angeordnete Planetenrad 11b ist fliegend gelagert und hat sich dadurch einfacher an ein Hohlrad und/oder ein Sonnenrad anpassen als das zur Antriebsseite hin benachbarte, zwischen zwei Wangen angeordnete Planetenrad 11a.

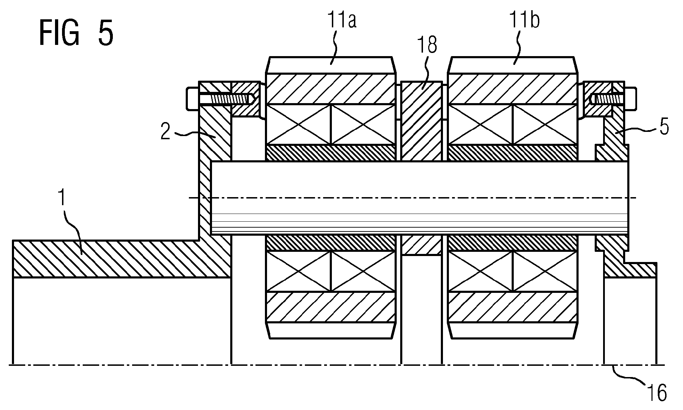

Fig. 5 zeigt einen mehrteiligen, dreiwangigen Planetenträger mit dreiwangig gelagerten Tandem-Planetenrädern 11a, 11b. Der in Fig. 5 dargestellte Planetenträger unterscheidet sich von dem in Fig. 4 dargestellten Planetenträger im Wesentlichen darin, dass die Planetenachse 13 nicht nur in der antriebsseitigen Wange 2 und der abtriebsseitigen Wange 5 gelagert ist, sondern zusätzlich in einer dritten Wange 18, welche zwischen der antriebsseitigen Wange 2 und der abtriebsseitigen Wange 5 angeordnet ist.

Im Gegensatz zu der in Fig. 4 dargestellten Konstruktion ist das abtriebsseitig auf der Planetenachse 13 angeordnete Planetenrad 11b nicht fliegend gelagert. Die in Fig. 5 dargestellte Konstruktion vermindert die Möglichkeit des abtriebsseitigen Planetenrads 11b, sich an ein Hohlrad und/oder ein Sonnenrad anzupassen, verleiht der Planetenachse 13 aber eine höhere Stabilität gegen ein Verkippen.

## Patentansprüche

1. Planetenträger, bestehend aus mindestens drei Einzelteilen (100, 200, 300), welche an Verbindungsstellen (8, 9) kraft- und/oder formschlüssig miteinander verbunden sind, wobei ein erstes Einzelteil (100) eine antriebsseitige Wange (2), ein zweites Einzelteil (200) eine abtriebsseitige Wange (5) und ein drittes Einzelteil (300) ein die beiden Wangen (2, 5) verbindendes Stegelement (4) aufweist.

2. Planetenträger nach Anspruch 1, wobei an den Verbindungsstellen (8, 9) der Einzelteile (100, 200, 300) verzahnungsartige Strukturen, insbesondere eine Kurzverzahnung, oder reibwerterhöhende Stoffe, insbesondere Klebstoffe, angeordnet sind.

3. Planetenträger nach Anspruch 1 oder 2, wobei sich die Verbindungsstellen (8, 9) am größten gemeinsamen Durchmesser der Einzelteile (100, 200, 300) befinden.

4. Planetenträger nach einem der vorhergehenden Ansprüche, wobei der Planetenträger drei Wangen (2, 5, 18) aufweist.

5. Planetenträger nach einem der vorhergehenden Ansprüche, wobei die in Achsrichtung (17) projizierten Flächen der Achssitze (6a, 6b) die Flächen der Planetenträgerlagerung (7) schneiden (15).
